# EUROPEAN PATENT APPLICATION

(11) **EP 4 525 450 A1**
(43) Date of publication of application: **19.03.2025**
(21) Application number: 23826480.8
(22) Date of filing: 21.06.2023
(51) Int. Cl.: H04N 21/2187

(54) **INFORMATION DISPLAY METHOD AND APPARATUS, DEVICE, STORAGE MEDIUM, AND PROGRAM PRODUCT**

(30) Priority: 21.06.2022 CN 202210706637
(71) Applicant: Beijing Zitiao Network Technology Co., Ltd., Beijing 100190 (CN)
(72) Inventor: LU, Jing, Beijing 100028 (CN); LI, Xin, Beijing 100028 (CN)
(74) Representative: Dentons UK and Middle East LLP
(86) International application number: PCT/CN2023/101583
(87) International publication number: WO 2023/246835

(57) **Abstract**

The present disclosure relates to an information display method and apparatus, a device, a storage medium and a program product. The method comprises: displaying a plurality of object identifiers in a first area of a content display page, the first area being configured for switching of the display of the plurality of object identifiers based on a first interaction operation; and in response to a preset operation on the first area, switching in the content display page to displaying the plurality of object identifiers in a second area, wherein the second area is configured for switching of the display of the plurality of object identifiers based on a second interaction operation.

## Description

### CROSS-REFERENCE TO RELATED APPLICATIONS

This application claims priority to the Chinese patent application No. 202210706637.7, filed on June 21, 2022, entitled "INFORMATION DISPLAY METHOD AND APPARATUS, DEVICE, STORAGE MEDIUM AND PROGRAM PRODUCT", which is hereby incorporated by reference in its entirety into the present application.

### TECHNICAL FIELD

The present disclosure relates to the technical field of computer processing, and in particular to an information display method and apparatus, a device, a storage medium and a program product.

### BACKGROUND

With the popularity of live video streaming, more and more users watch live streams through various live streaming platforms. The live streaming platforms have provided various ways to display users who are on Live in order to facilitate viewers to quickly find their favorite live streaming content.

### SUMMARY

Embodiments of the present disclosure provide an information display method and apparatus, a device, a storage medium and a program product.

According to a first aspect, an embodiment of the present disclosure provides an information display method, comprising:
displaying a plurality of object identifiers in a first area of a content display page, the first area being configured for switching of the display of the plurality of object identifiers based on a first interaction operation; and
in response to a preset operation on the first area, switching to displaying the plurality of object identifiers in a second area in the content display page, wherein the second area is configured for switching of the display of the plurality of object identifiers based on a second interaction operation.

According to second aspect, an embodiment of the present disclosure provides an information display apparatus, comprising:
a first area display module for displaying a plurality of object identifiers in a first area of a content display page, the first area being configured for switching of the display of the plurality of object identifiers based on a first interaction operation; and
a second area display module for switching to displaying the plurality of object identifiers in a second area in the content display page in response to a preset operation on the first area, wherein the second area is configured for switching of the display of the plurality of object identifiers based on a second interaction operation.

According to a third aspect, an embodiment of the present disclosure provides an electronic device, the electronic device comprising:
one or more processors;
storage means for storing one or more programs that,
when executed by the one or more processors, cause the one or more processors to implement the information display method according to the first aspect above.

According to a fourth aspect, an embodiment of the present disclosure provides a computer readable storage medium having stored thereon a computer program that, when executed by a processor, implements the information display method according to the first aspect above.

According to a fifth aspect, an embodiment of the present disclosure provides a computer program product, the computer program product comprising a computer program or computer instructions that, when executed by a processor, implement the information display method according to the first aspect above.

According to a sixth aspect, an embodiment of the present disclosure provides a computer program, the computer program comprising instructions that, when executed by a processor, implement the information display method according to the first aspect above.

### BRIEF DESCRIPTION OF THE DRAWINGS

The above and other features, advantages, and aspects of embodiments of the present disclosure will be more apparent in conjunction with the accompanying drawings and with reference to the following detailed description. Throughout the accompanying drawings, identical or similar reference signs represent identical or similar elements. It should be understood that the accompanying drawings are illustrative and that components and elements are not necessarily drawn to scale.
FIG. 1 shows an architectural diagram of an information display scenario provided in an embodiment of the present disclosure.
FIG. 2 is a flowchart of an information display method in an embodiment of the present disclosure.
FIG. 3a is a schematic diagram of displaying object identifiers in a first area in an embodiment of the present disclosure.
FIG. 3b is a schematic diagram of displaying status information based on an operation on a first area in an embodiment of the present disclosure.
FIG. 4 is a schematic diagram of displaying object identifiers in a second area in an embodiment of the present disclosure.
FIG. 5 is a schematic diagram of moving and displaying object identifiers in a second area in an embodiment of the present disclosure.
FIG. 6 is a flowchart of an information display method in an embodiment of the present disclosure.
FIG. 7a is a schematic diagram of displaying object identifiers in sub-areas of a second area in an embodiment of the present disclosure.
FIG. 7b is a schematic diagram of displaying object identifiers in sub-areas of a second area in an embodiment of the present disclosure.
FIG. 8 is a schematic diagram of displaying pieces of association information in sub-areas of a second area in an embodiment of the present disclosure.
FIG. 9 is a structural schematic diagram of a structure of an information display apparatus in an embodiment of the present disclosure.
FIG. 10 is a structural schematic diagram of a structure of an electronic device in an embodiment of the present disclosure.

### DETAILED DESCRIPTION

Embodiments of the present disclosure will be described in more details below with reference to the accompanying drawings. Although certain embodiments of the present disclosure are shown in the accompanying drawings, it should be understood, however, that the present disclosure may be realized in various forms and should not be interpreted as being limited to the embodiments set forth herein. Instead, these embodiments are provided for a more thorough and complete understanding of the present disclosure. It should be understood that the accompanying drawings and embodiments of the present disclosure are for exemplary purposes only and are not intended to limit the scope of protection of the present disclosure.

It should be understood that the respective steps recited in the method embodiments of the present disclosure may be performed in different orders, and/or in parallel. Furthermore, the method embodiments may include additional steps and/or omit performing some illustrated steps. The scope of the present disclosure is not limited in this regard.

The term "including" and variations thereof, as used herein, is inclusive, i.e., "including but not limited to". The term "based on" is "based at least in part on". The term "an embodiment" means "at least one embodiment"; the term "another embodiment" means "at least one other embodiment"; and the term "some embodiments" means "at least some embodiments". Relevant definitions of other terms will be given in the following description.

It should be noted that the concepts of "first", "second" and the like mentioned in the present disclosure are only used to differentiate different apparatuses, modules or units, and are not used to define the order or interdependence of the functions performed by these apparatuses, modules or units.

It should be noted that the modifiers "a/an" and plural forms of nouns mentioned in the present disclosure are illustrative rather than restrictive, and those skilled in the art should understand that, unless otherwise expressly stated in the context, they should be understood as "one or more".

In order to facilitate viewers to quickly view the live streaming of followed users, a small number of (e.g., four or five)object identifiers of followed users are usually displayed in the form of a single row in a content display page. The object identifiers are used to indicate that the respective users are on a Live. Such display manner for the object identifiers in the content display page is dull and results in poor user experience.

Embodiments of the present disclosure provide an information display method and apparatus, a device, a storage medium and a program product, the method comprising: displaying a plurality of object identifiers in a first area of a content display page, the first area being configured for switching of the display of the plurality of object identifiers based on a first interaction operation; and in response to a preset operation on the first area, switching to displaying the plurality of object identifiers in a second area in the content display page, wherein the second area is configured for switching of the display of the plurality of object identifiers based on a second interaction operation. Embodiments of the present disclosure improve the diversity of the display of the object identifiers by displaying the object identifiers in different display manners based on different interaction operations and different areas, thereby improving user experience.

The names of messages or information exchanged between a plurality of apparatuses in embodiments of the present disclosure are used for illustrative purposes only, and are not used to limit the scope of such messages or information.

Before further detailed description of embodiments of the present disclosure, the terms and phrases involved in the embodiments of the present disclosure are described. The terms and phrases involved in embodiments of the present disclosure are applicable to the following explanations.

"In response to" is used for indicating a condition or status on which an operation performed depends; when a condition or status on which one or more operations performed depend is satisfied, the one or more operations performed may be real-time or there may be a set delay; unless otherwise specified, there is no restriction on the order of performance of the plurality of operations performed.

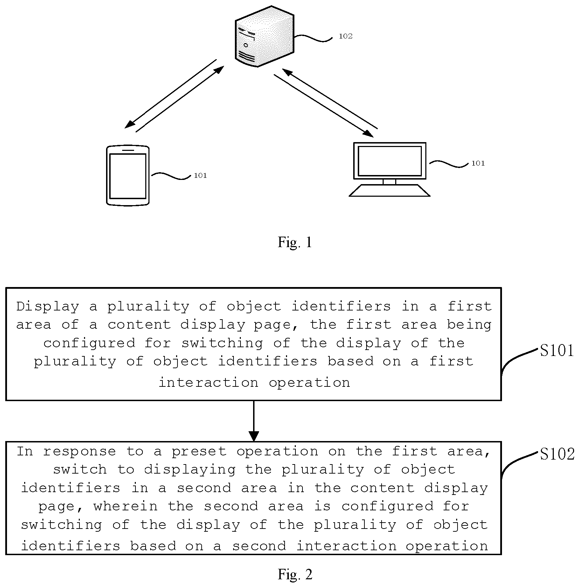

FIG. 1 shows an architectural diagram of an information display scenario provided in an embodiment of the present disclosure.

As shown in FIG. 1, the architectural diagram may include at least one electronic device 101 at a client side and at least one server 102 at a server side. The electronic device 101 may establish a connection and exchange information with the server 102 via a network protocol such as Hyper Text Transfer Protocol over Secure Socket Layer (HTTPS), wherein, for example, the electronic device 101 may be a mobile terminal, a fixed terminal, or a portable terminal, such as a mobile phone, a station, a unit, a device, a multimedia computer, a multimedia tablet, an Internet node, a communicator, a desktop computer, a laptop computer, a notebook computer, a netbook computer, a tablet computer, a personal communication system (PCS) device, a personal navigation device, Personal Digital Assistant (PDA), an audio/video player, a digital camera/camcorder, a locating device, a television receiver, a radio broadcast receiver, an e-book device, a gaming device, a Head-Up Display device, or any combination thereof, including accessories and peripherals for these devices or any combination thereof. The server 102 may be a physical server or a cloud server. The server may be one server, or a cluster of servers.

In an embodiment of the present disclosure, a client installed in the electronic device 101 may respond to an access request for a content display page. After receiving the access request, the client of the electronic device 101 sends the access request to the server 102. The server 102, based on the above access request, acquires display content of the content display page, the display content including a plurality of object identifiers, and returns the display content of the content display page to the client of the electronic device 101. The client of the electronic device 101, after receiving the display content, displays the content display page on a display screen of the electronic device. The information display method provided in the embodiments of the present application will be described in detail below in conjunction with the accompanying drawings.

FIG. 2 is a flowchart of an information display method in an embodiment of the present disclosure. The present embodiment may be applicable to a case where object identifiers are displayed in a variety of manners. The method may be performed by an information display apparatus, which may be implemented by means of software and/or hardware, and may be configured in an electronic device.

As shown in FIG. 2, the information display method provided by the embodiment of the present disclosure mainly includes steps S101-S102.

S101: displaying a plurality of object identifiers in a first area of a content display page, the first area being configured for switching of the display of the plurality of object identifiers based on a first interaction operation.

The content display page can be understood as a page in which object identifiers and multimedia information of objects that a current user has followed are displayed on a client. The client refers to an application program running in an electronic device for providing various services, such as a video shooting client. The current user may be understood as a user account that is logged in and running in the client. For example, the followed objects may refer to accounts that the current user has followed, and the followed objects may be one or more of a personal account, a public account, an official account, and the like.

An object identifier is mainly used to indicate an identifier of a current status of a followed object, and optionally, the current status may be "on a Live". Optionally, the object identifier may be an identifier indicating that the followed object is on a Live.

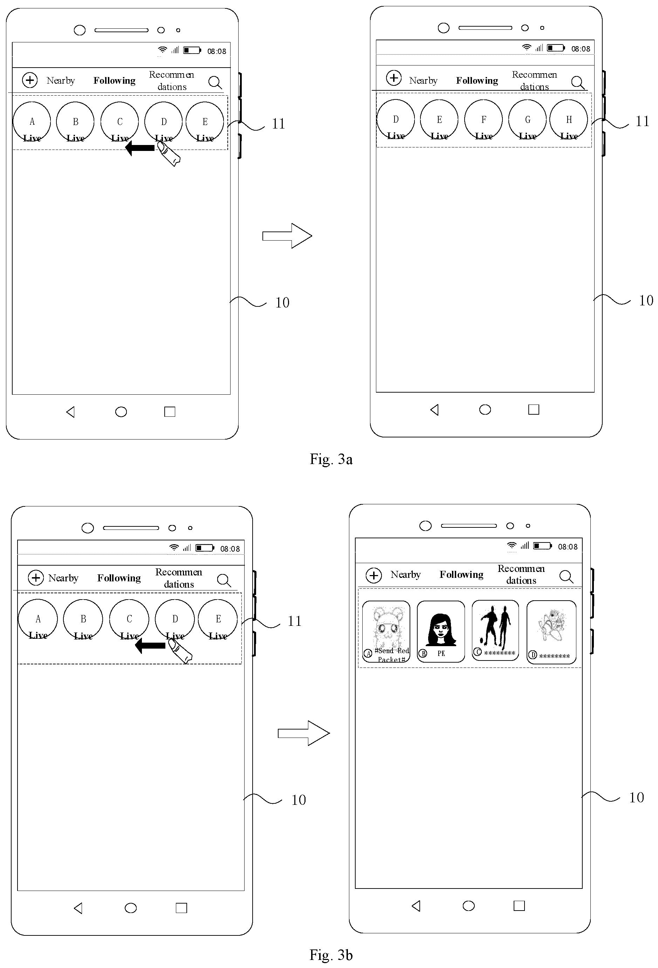

In some embodiments, the first area may be understood as a mask layer area located at the top of the content display page. The number of object identifiers displayed in the first area may be preset. Optionally, as shown in FIG. 3a, five object identifiers are displayed in the first area, each of which includes an object avatar and prompt information that the object is on a Live.

In an embodiment of the present disclosure, as shown in FIG. 3a, the plurality of object identifiers are displayed in the form of a single row in the first area.

In an embodiment of the present disclosure, the plurality of object identifiers are displayed in only one row in the first area. As shown in FIG. 3a, an object identifier A, an object identifier B, an object identifier C, an object identifier D, and an object identifier E are displayed in the form of a single row in a first area 11 of the content display page 10.

In an embodiment of the present disclosure, the first interaction operation may be understood as an operation to switch the display of the object identifiers in the first area, i.e., to update the object identifiers displayed in the first area based on the first interaction operation. The first interaction operation is a sliding operation in a first direction, and exemplarily, the sliding operation in the first direction is a lateral sliding operation, which may be toward the left or toward the right, and is not limited in the present embodiment. As shown in FIG. 3a, in response to an operation of sliding left in the first area, the object identifiers are controlled to be moved to the left and displayed, for example, the object identifier A, the object identifier B, and the object identifier C disappear from the left boundary in the first area, the object identifier D and the object identifier E move to the left in sequence, and the object identifier F, the object identifier G, and the object identifier H appear in sequence at the right boundary in the first area and move to the left in sequence.

In the embodiment of the present disclosure, the moving direction and moving speed of the object identifiers are determined based on the direction and speed of the sliding operation, which are not specifically defined in the present embodiment.

In an embodiment of the present disclosure, the display order of the plurality of object identifiers is determined by degrees of association between the objects indicated by the object identifiers and the current user. Furthermore, the plurality of object identifiers displayed in the first area are arranged from left to right in the order of largest to smallest in the degrees of association.

In an embodiment of the present disclosure, the display order of the plurality of object identifiers is determined by live stream start times of the objects indicated by the object identifiers. Further, the plurality of object identifiers displayed in the first area are arranged from left to right in the order of smallest to largest in the live stream starting times.

In an embodiment of the present disclosure, the first area is configured for switching of the display of pieces of association information corresponding to the plurality of object identifiers based on the first interaction operation. The pieces of association information corresponding to the object identifiers includes the object identifiers and status information, wherein the status information may be information related to a live stream of a streamer, such as: topic words involved during the live stream of the streamer, live stream status, live stream content, live stream cover image, etc., and so on. The live stream status can include a PK status, sending red packet, and so on. The live stream cover image may be a first frame image of a live stream video, or any one video frame of the live stream video that is arbitrarily selected, or a cover image selected by the streamer. As shown in FIG. 3b, in response to an operation of sliding left in the first area, pieces of status information corresponding to a plurality of object identifiers are displayed. The plurality of pieces of status information are displayed in the form of a single row.

S102: switching to displaying the plurality of object identifiers in a second area in the content display page in response to a preset operation on the first area, wherein the second area is configured for switching of the display of the plurality of object identifiers based on a second interaction operation.

In an embodiment of the present disclosure, the preset operation on the first area comprises at least one of: a tapping operation on the first area; a triggering operation on a preset control included in the first area; and a sliding operation in a third direction with a starting point within the first area.

The tapping operation on the first area may be a tapping operation on any one position in the first area 11. An expansion control is provided in the first area, and the expansion control is configured for indicating the use of the second area to display the plurality of object identifiers.

Further, the third direction is different from the first direction. The sliding operation in the third direction may be a downward sliding operation, and the starting point of sliding trajectory corresponding to the sliding operation is within the first area. Exemplarily, the third direction may be the same as or different from the second direction.

In the embodiment of the present disclosure, a variety of manners are provided for switching to displaying the plurality of object identifiers in the second area, thereby improving user experience.

In an embodiment of the present disclosure, an area of the second area is larger than an area of the first area. Optionally, the area of the second area is 70% of the content display page. Further, the second area may be a seven-split-screen area of the content display page, and the second area is a mask layer area in the content display page.

In an embodiment of the present disclosure, the second interaction operation can be understood as an operation to switch the display of the object identifiers in the second area, i.e., to update the object identifiers displayed in the second area based on the second interaction operation. The second interaction operation is a sliding operation in a second direction, which is different from the first direction. Exemplarily, the second direction may include an upward or downward vertical direction, and the first direction is a lateral direction.

Exemplarily, the object identifiers may be displayed in the second area in the form of a first matrix. The form in a matrix can be understood as the plurality of object identifiers being displayed in the form of rows and columns and no longer in the form of a single row.

In the embodiment of the present disclosure, the number of object identifiers included in each row in the form of the first matrix may be set according to actual condition. Optionally, the number of object identifiers included in each row is 4, i.e., when the object identifiers are displayed in the first matrix, four object identifiers are displayed in each row. The number of rows in the form of the first matrix may be determined based on the total number of all object identifiers. That is, a ratio of the total number of all object identifiers to the number of object identifiers included in each row is determined as the number of rows in the form of the first matrix.

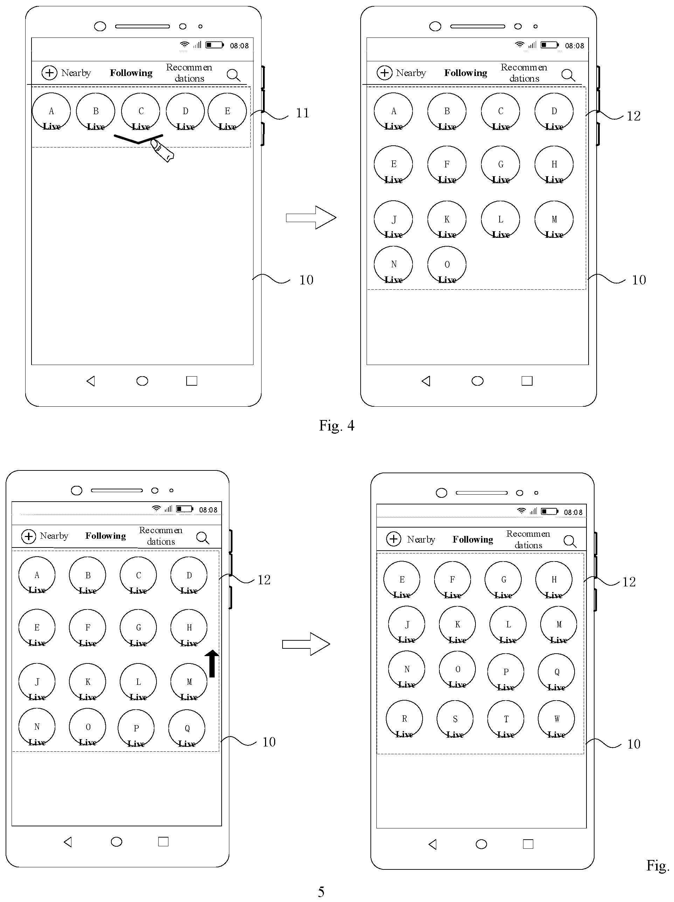

In an implementation of the present disclosure, as shown in FIG. 4, in response to a triggering operation on an expansion control in a first area, the first area is expanded as a second area, in which all object identifiers are displayed in the form of a first matrix.

In the embodiment of the present disclosure, an area of the second area is larger than an area of the first area, and the number of object identifiers that can be displayed in the second area is more than that in the first area, so that a user can see more object identifiers in a content display page, which can assist the user in screening.

In an implementation of the present disclosure, the switching to displaying the plurality of object identifiers in a second area in the content display page in response to a preset operation on the first area comprises: determining whether the number of the plurality of object identifiers is greater than a first threshold; and if the number of the plurality of object identifiers is greater than the first threshold, switching to displaying the plurality of object identifiers in the second area in the content display page.

In the implementation of the present disclosure, the first threshold can be understood as the number of object identifiers that can be displayed simultaneously in the first area. Optionally, as shown in FIG. 3a, the first threshold is 5. The number of the plurality of object identifiers may be understood as the number of all objects that are followed by the current user and are on a Live.

In the embodiment of the present disclosure, if the number of the plurality of object identifiers is less than or equal to the first threshold, it is indicated that the plurality of object identifiers can all be displayed in the first area without a lateral sliding operation, and in such a case, the content display page is not switched to displaying in the second area.

In the embodiment of the present disclosure, if the number of the plurality of object identifiers is greater than the first threshold, it is indicated that the plurality of object identifiers cannot be fully displayed in the first area without a lateral sliding operation, and in such a case, the content display page is switched to the second area, in which the plurality of object identifiers need to be displayed in the form of a plurality of rows and columns, i.e., the form of a matrix.

In an implementation of the present disclosure, the method further comprises: controlling the plurality of object identifiers to be moved and displayed in the second area in response to the number of the plurality of object identifiers being greater than a second threshold.

In the implementation of the present disclosure, the second threshold may be determined based on an area of the second area and the number of object identifiers displayed in each row. Optionally, the second threshold may be set in accordance with needs. In the embodiment of the present disclosure, as an example, the second threshold is 20 for illustration. Twenty object identifiers are displayed in the second area in the form of a matrix of five rows and four columns.

In an implementation of the present disclosure, the number of a plurality of object identifiers, i.e., the number of all object identifiers, is acquired. It is determined whether the number of the plurality of object identifiers is greater than the second threshold. If the number of the plurality of object identifiers is less than or equal to the second threshold, all of the object identifiers are displayed in the form of the first matrix in the second area, as shown in FIG. 4.

In an implementation of the present disclosure, if the number of the plurality of object identifiers is greater than the second threshold, limited by the area of the second area, it is unable to display all of the object identifiers in the second area, and in such a case, the plurality of object identifiers are moved and displayed in the form of the first matrix in the second area.

In an implementation of the present disclosure, the plurality of object identifiers are displayed and moved from bottom to top in the form of the first matrix in the second area at a preset moving speed.

In an implementation of the present disclosure, in response to a vertical sliding operation on the second area by the user, the moving speed and moving direction of the plurality of object identifiers in the second area are controlled based on the direction and speed of the vertical sliding operation. As shown in FIG. 5, when the number of the plurality of object identifiers is greater than 20, the plurality of object identifiers are controlled to be moved from bottom to top and displayed in the second area.

In the embodiment of the present disclosure, when there are excessive object identifiers, the moving display manner is adopted to facilitate the user to view more information.

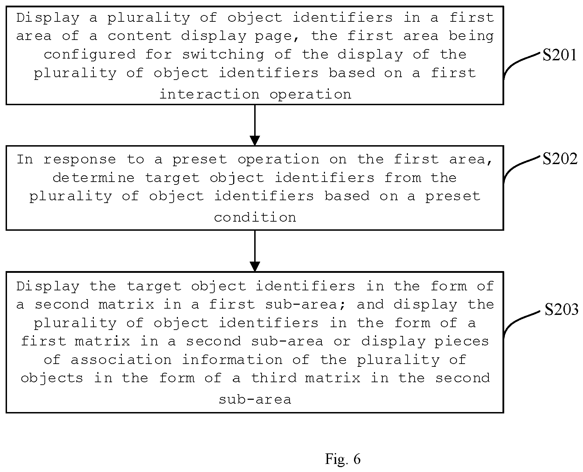

On the basis of the above embodiments, an embodiment of the present disclosure further optimize the information display method, as shown in FIG. 6, the optimized information display method mainly comprises steps: S201-S203.

S201: displaying a plurality of object identifiers in a first area of a content display page, the first area being configured for switching of the display of the plurality of object identifiers based on a first interaction operation.

The process performed in step S201 in the embodiment of the present disclosure is the same as that in the step S101 in the above embodiment. Please refer to the description in the above embodiment for details, which would not be specifically limited in the present embodiment.

S202: in response to a preset operation on the first area, determining target object identifiers from the plurality of object identifiers based on a preset condition.

The preset condition may be understood as a screening condition for the target object identifiers.

In an implementation of the present disclosure, the object identifiers that rank in the top N in terms of a degree of association with the current user among the object identifiers as the target object identifiers, wherein N is an integer greater than or equal to 2, and the degree of association may be calculated based on information of association between an object to which an object identifier belongs and the current user, which is not specifically limited in the present embodiment.

In an implementation of the present disclosure, objects among the plurality of object identifiers that are stuck on top by the current user are acquired, and object identifiers corresponding to the sticky objects on top are determined as the target object identifiers.

In an implementation of the present disclosure, in the case where authorization is acquired from the user, the target object identifiers are acquired based on a browsing status of the user. Exemplarily, the historical status of live streams viewed by the current user corresponding to the plurality of object identifiers are acquired, and N object identifiers closest to the current time are determined as the target object identifiers.

S203: displaying the target object identifiers in the form of a second matrix in a first sub-area; and displaying the plurality of object identifiers in the form of a first matrix in a second sub-area or displaying pieces of association information of the plurality of objects in the form of a third matrix in the second sub-area.

In the embodiment of the present disclosure, the second area is divided into a first sub-area 13 and a second sub-area 14, wherein the first sub-area is located above the second sub-area.

In the present embodiment of the present disclosure, each row of the second matrix and each row the first matrix include the same number of object identifiers, but the number of rows included in the matrices are different. The number of rows of the second matrix is determined by the number of the target object identifiers and the number of object identifiers included in each row.

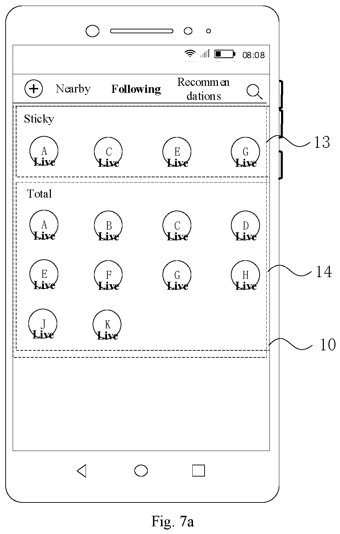

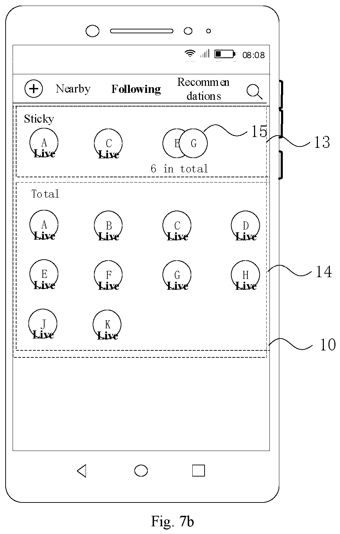

In an implementation of the present disclosure, as shown in FIG. 7a, target object identifiers are displayed in a first sub-area 13 and a plurality of object identifiers are displayed in a second sub-area 14. As shown in FIG. 7b, partial target object identifiers are collapsed and displayed in the first sub-area 13 when a preset condition is satisfied. A manner 15 in which two avatars overlap indicates that partial target object identifiers are collapsed, as shown in FIG. 7b. In response to a triggering operation on the manner 15 in which the two avatars overlap, all of the target object identifiers are displayed. The preset condition may be understood as a condition where the users corresponding to the current target object identifiers do not satisfy a preset status, for example, there is no updated work or live stream of the users corresponding to the target object identifiers, and the preset condition may also be understood as the number of the target object identifiers exceeding a preset number, etc.

In an implementation of the present disclosure, the displaying pieces of association information of the plurality of objects in the form of a third matrix in the second sub-area comprises: acquiring object status information corresponding to the plurality of object identifiers; and displaying the object identifiers and object status information in the form of the third matrix in the second sub-area.

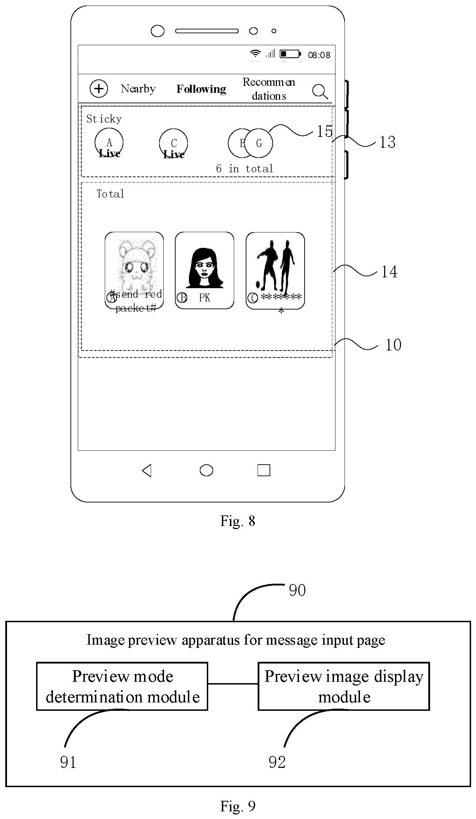

As shown in FIG. 8, the object identifiers and object status information are displayed in the form of the third matrix in the second sub-area 14. The pieces of association information corresponding to the object identifiers includes the object identifiers and status information, wherein the status information may be information related to a live stream of a streamer, such as: topic words involved during the live stream of the streamer, live stream status, live stream content, live stream cover image, and so on. The live stream status can include a PK status, sending red packet, and so on. The live stream cover image may be a first frame image of a live stream video, or any one video frame of the live stream video that is arbitrarily selected, or a cover image selected by the streamer. The number of pieces of association information included in each row of the third matrix is set according to actual condition, e.g., it may be 3, or it may be 2, which are not specifically defined in the present embodiment. The number of columns of the third matrix is determined by the number of the object identifiers and the number of pieces of association information included in each row.

In an implementation of the present disclosure, in response to the number of the pieces of association information of the objects being greater than a third threshold, the object identifiers and object status information are controlled to be moved and displayed in the content display page.

The third threshold may be determined based on an area of the second sub-area, and optionally, the third threshold is 6. It is to be noted that the number of the pieces of association information of the objects is the same as the number of the above object identifiers.

In an implementation of the present disclosure, the plurality of pieces of association information of the objects are displayed and moved from bottom to top in the form of the third matrix in the second sub-area at a preset moving speed.

In an implementation of the present disclosure, in response to a vertical sliding operation on the second sub-area by the user, the moving direction and moving speed of the plurality of pieces of association information of the objects within the second sub-area are controlled based on the direction and speed of the vertical sliding operation.

In the embodiment of the present disclosure, when there are excessive pieces of association information of objects, the moving display manner is adopted to facilitate the user to view more information.

In an implementation of the present disclosure, a display manner for the object identifiers in the form of the third matrix is different from that in the form of the first matrix; and/or the display manner for the object identifiers in the form of the third matrix is different from that in the form of the second matrix.

The difference between the above display manners may be understood as a difference in the color, shape, etc. of the object identifiers.

In the embodiment of the present disclosure, the pieces of association information of the object identifiers are displayed to enable the user to acquire more live stream information.

FIG. 9 is a schematic diagram of a structure of an information display apparatus in an embodiment of the present disclosure. The present embodiment may be applicable to a case of displaying object identifiers in a variety of manners, the information display apparatus may be implemented by means of software and/or hardware, and the information display apparatus may be configured in an electronic device.

As shown in FIG. 9, an information display apparatus 90 provided by the present embodiment of the disclosure mainly includes: a first area display module 91, and a second area display module 92.

The first area display module 91 is configured for displaying a plurality of object identifiers in a first area of a content display page, the first area being configured for switching of the display of the plurality of object identifiers based on a first interaction operation. The second area display module 92 is configured for switching to displaying the plurality of object identifiers in a second area in the content display page in response to a preset operation on the first area, wherein the second area is configured for switching of the display of the plurality of object identifiers based on a second interaction operation.

The embodiment of the present disclosure provides an information display apparatus, the apparatus configured for performing a process of: displaying a plurality of object identifiers in a first area of a content display page, the first area being configured for switching of the display of the plurality of object identifiers based on a first interaction operation; and switching to displaying the plurality of object identifiers in a second area in the content display page in response to a preset operation on the first area, wherein the second area is configured for switching of the display of the plurality of object identifiers based on a second interaction operation. The embodiment of the present disclosure improves the diversity of the display of the object identifiers by displaying the object identifiers in different display manners based on different interaction operations and different areas, thereby improving user experience.

In an implementation of the present disclosure, the second area display module 92, comprises: a first threshold determination unit for determining whether the number of the plurality of object identifiers is greater than a first threshold; and a first object identifier display unit for switching to displaying the plurality of object identifiers in a second area in the content display page in response to the number of the plurality of object identifiers being greater than the first threshold.

In an implementation of the present disclosure, the plurality of object identifiers are displayed in the form of a single row in the first area, and/or the object identifiers are displayed in the form of a first matrix in the second area.

In an implementation of the present disclosure, the first interaction operation is sliding operation in a first direction, and the second interaction operation is a sliding operation in a second direction, the first direction being different from the second direction.

In an implementation of the present disclosure, the second area display module 92, further comprises: an object identifier moving display unit for controlling the plurality of object identifiers to be moved and displayed in the second area based on the first sliding information in response to the number of the plurality of object identifiers being greater than a second threshold.

In an implementation of the present disclosure, the second area comprises a first sub-area and a second sub-area, and the apparatus further comprises: a target object identifier determination unit for determining target object identifiers from the plurality of object identifiers based on a preset condition; and the second area display module 92 comprising: a second object identifier display unit for displaying the target object identifiers in the form of a second matrix in the first sub-area; and the first object identifier display unit for further displaying the plurality of object identifiers in the form of the first matrix in the second sub-area or displaying pieces of association information of the plurality of objects in the form of a third matrix in the second sub-area.

In an implementation of the present disclosure, the first object identifier display unit, when used for displaying the pieces of association information of the plurality of objects in the form of the third matrix in the second sub-area, comprises: a status information acquisition sub-unit for acquiring object status information corresponding to the plurality of object identifiers; and a status information display sub-unit for
displaying the object identifiers and object status information in the form of the third matrix in the second sub-area.

In an implementation of the present disclosure, the second area display module 92, comprises: a status information moving display unit for controlling the object identifiers and object status information to be moved and displayed in the content display page, in response to the number of the pieces of association information of the objects being greater than a third threshold.

In an implementation of the present disclosure, a display manner for the object identifiers in the form of the third matrix is different from that in the form of the first matrix; and/or the display manner for the object identifiers in the form of the third matrix is different from that in the form of the second matrix.

In an implementation of the present disclosure, the preset operation on the first area comprises at least one of: a tapping operation on the first area; a triggering operation on an expansion control included in the first area; and a sliding operation in a second direction with a starting point within the first area.

The information display adjustment apparatus provided in the embodiment of the present disclosure can perform the steps performed in the information display method provided in the method embodiment of the present disclosure_{∘} The specific steps performed and the beneficial effects would not be repeated herein.

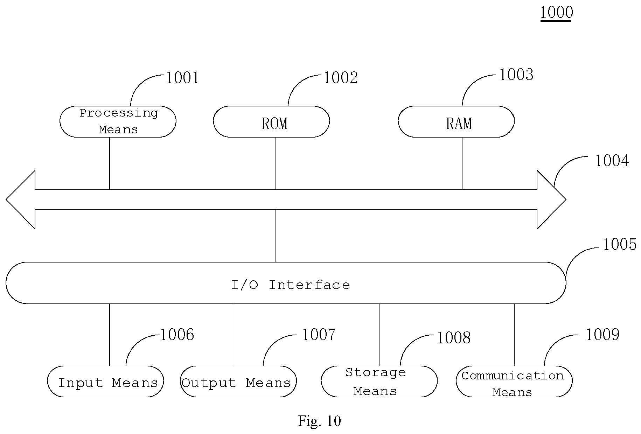

FIG. 10 is a structural schematic diagram of an electronic device in an embodiment of the present disclosure. With specific reference to FIG. 10 below, the schematic diagram of the structure suitable for implementing an electronic device 1000 in the embodiment of the present disclosure is shown. The electronic device 1000 in the embodiment of the present disclosure may include, but is not limited to, a mobile terminal such as a mobile phone, a laptop computer, a digital broadcast receiver, a PDA (personal digital assistant), a PAD (tablet computer), a PMP (portable multimedia player), a vehicle terminal (e.g., a vehicle navigation terminal), a wearable terminal device, and the like, and a fixed terminal such as a digital TV, a desktop computer, a smart home device, and the like. The electronic device illustrated in FIG. 10 is merely an example and should not impose any limitation on the functions and scope of use of the embodiment of the present disclosure.

As shown in FIG. 10, the electronic device 1000 may include a processing means 1001 (e.g., a central processor, a graphics processor, etc.) that may perform various appropriate actions and processes based on a program stored in a read-only memory (ROM) 1002 or a program loaded from a storage means 1008 into a random-access memory (RAM) 1003 to implement the information display method of the embodiment as described in the present disclosure. Also stored in the RAM 1003 are various programs and data necessary for operation of the terminal device 1000. The processing means 1001, the ROM 1002, and the RAM 1003 are connected to each other via a bus 1004. Input/output (I/O) interface 1005 is also connected to the bus 1004.

Typically, the following means may be connected to the I/O interface 1005: an input means 1006 including, for example, a touch screen, a touch pad, a keyboard, a mouse, a camera, a microphone, an accelerometer, a gyroscope, and the like; an output means 1007 including, for example, a liquid crystal display (LCD), a loudspeaker, a vibrator, and the like; a storage means 1008 including, for example, a magnetic tape, a hard disk, and the like; and a communication means 1009. The communication means 1009 may allow the terminal device 1000 to communicate wirelessly or wiredly with other devices to exchange data. Although FIG. 10 illustrates the terminal device 1000 comprising various means, it should be understood that it is not required to implement or comprise all of the illustrated means. More or fewer means may alternatively be implemented or possessed.

In particular, according to the embodiment of the present disclosure, the process described above with reference to the flowchart may be implemented as a computer software program. For example, an embodiment of the present disclosure includes a computer program product comprising a computer program carried on a nontransitory computer readable medium, the computer program comprising program code for executing the method shown in the flowchart so as to implement the information display method as described above. In such embodiment, the computer program may be downloaded from a network and installed via the communication means 1009 or installed from the storage means 1008, or installed from the ROM 1002. The computer program when executed by the processing means 1001, performs the above-described functions as defined in the method of the embodiment of the present disclosure.

It is noted that the computer readable medium described above in the present disclosure may be a computer readable signal medium or a computer readable storage medium or any combination of the two. The computer readable storage medium may be, for example, but is not limited to, an electrical, magnetic, optical, electromagnetic, infrared, or semiconductor system, apparatus, or device, or any combination thereof. More specific examples of computer readable storage media may include, but are not limited to: electrical connections with one or more wires, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic memory devices, or any suitable combination of the above. In the present disclosure, the computer readable storage medium may be any tangible medium containing or storing a program that may be used by or in combination with an instruction execution system, apparatus, or device. And in the present disclosure, the computer readable signal medium may include a data signal propagated in a baseband or as part of a carrier that carries computer readable program code. Such propagated data signal may take a variety of forms, including, but not limited to, an electromagnetic signal, an optical signal, or any suitable combination of the above. The computer readable signal medium may also be any computer readable medium other than the computer readable storage medium that sends, propagates, or transmits a program for use by, or in combination with, an instruction execution system, apparatus, or device. The program code contained on the computer readable medium may be transmitted using any suitable medium, including, but not limited to: wire, optical fiber cable, RF (radio frequency), or the like, or any suitable combination of the above.

In some embodiments, the client and server may communicate utilizing any currently known or future developed network protocol such as HTTP (Hyper Text Transfer Protocol) or the like, and may be interconnected with digital data communications (e.g., communication networks) of any form or medium. Examples of communication networks include local area networks ("LANs"), wide area networks ("WANs"), the Internet, and Peer-to-Peer networks (e.g., ad hoc networks), as well as any currently known or future developed networks.

The above computer readable medium may be contained in the above electronic device; or it may be separate and not assembled into the above electronic device.

The above computer readable medium carries one or more programs that, when executed by the terminal device, cause the terminal device to: display a plurality of object identifiers in a first area of a content display page, the first area being configured for switching of the display of the plurality of object identifiers based on a first interaction operation; and in response to a preset operation on the first area, switching to displaying the plurality of object identifiers in a second area in the content display page, wherein the second area is configured for switching of the display of the plurality of object identifiers based on a second interaction operation.

Optionally, when the above one or more programs are executed by the terminal device, the terminal device may also perform other steps described in the above embodiments.

Computer program code for performing the operations of the present disclosure may be written in one or more programming languages, or combinations thereof, including, but not limited to, object-oriented programming languages, such as Java, Smalltalk, C++, and conventional procedural programming languages, such as the "C" language or similar programming languages. The program code may be executed completely on a user's computer, partially executed on a user' computer, executed as a stand-alone software package, partially on a user's computer and partially on a remote computer, or completely on a remote computer or server. In the case involving a remote computer, the remote computer may be connected to the user computer via any kind of network, including a local area network (LAN) or a wide area network (WAN), or, alternatively, it may be connected to an external computer (e.g., by utilizing an Internet service provider to connect via the Internet).

The flowcharts and block diagrams in the accompanying drawings illustrate the architecture, functionality, and operations that may be implemented according to the system, method, and computer program product of various embodiments of the present disclosure. At this point, each box in the flowcharts or block diagrams may represent a module, program segment, or portion of code that contains one or more executable instructions for implementing a specified logical function. It should also be noted that in some embodiments as replacements, the functions indicated in the boxes may also occur in a different order than those indicated in the accompanying drawings. For example, two consecutively presented boxes may actually be executed substantially in parallel, and they may sometimes be executed in reverse order, depending on the functionality involved. It is also noted that each of the boxes in the block diagrams and/or flowcharts, and a combination of boxes in the block diagrams and/or flowcharts, may be implemented with a dedicated hardware-based system that performs specified functions or operations, or may be implemented with a combination of dedicated hardware and computer instructions.

The units described as being involved in embodiments of the present disclosure may be implemented by way of software or may be implemented by way of hardware, wherein the name of a unit does not constitute a limitation on the unit itself in a certain case.

The functions described above herein may be performed, at least in part, by one or more hardware logic components. For example, exemplary types of hardware logic components that may be used comprise but are not limited to: field programmable gate arrays (FPGAs), application-specific integrated circuits (ASICs), application-specific standard products (ASSPs), systems on chip (SOCs), complex programmable logic devices (CPLDs), and the like.

In the context of the present disclosure, a machine readable medium may be a tangible medium that may contain or store a program for use by or in conjunction with an instruction execution system, device, or apparatus. The machine readable medium may be a machine readable signal medium or a machine readable storage medium. The machine readable medium may include, but is not limited to, an electronic, magnetic, optical, electromagnetic, infrared, or semiconductor system, device, or apparatus, or any suitable combination of the above. More specific examples of machine readable storage media would include electrical connections based on one or more wires, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination of the above.

According to one or more embodiments of the present disclosure, the present disclosure provides an information display method, comprising: displaying a plurality of object identifiers in a first area of a content display page, the first area being configured for switching of the display of the plurality of object identifiers based on a first interaction operation; and switching to displaying the plurality of object identifiers in a second area in the content display page in response to a preset operation on the first area, wherein the second area is configured for switching of the display of the plurality of object identifiers based on a second interaction operation.

According to one or more embodiments of the present disclosure, the present disclosure provides an information display method, wherein the switching to displaying the plurality of object identifiers in a second area in the content display page in response to a preset operation on the first area comprises: determining whether the number of the plurality of object identifiers is greater than a first threshold; and in response to the number of the plurality of object identifiers being greater than the first threshold, switching to displaying the plurality of object identifiers in the second area in the content display page.

According to one or more embodiments of the present disclosure, the present disclosure provides an information display method, wherein the plurality of object identifiers are displayed in the form of a single row in the first area, and/or the object identifiers are displayed in the form of a first matrix in the second area.

According to one or more embodiments of the present disclosure, the present disclosure provides an information display method, wherein the first interaction operation is a sliding operation in a first direction, and the second interaction operation is a sliding operation in a second direction, the first direction being different from the second direction.

According to one or more embodiments of the present disclosure, the present disclosure provides an information display method, wherein the method further comprises: controlling the plurality of object identifiers to be moved and displayed in the second area in response to the number of the plurality of object identifiers being greater than a second threshold.

According to one or more embodiments of the present disclosure, the present disclosure provides an information display method, wherein the second area comprises a first sub-area and a second sub-area, and the method further comprises: determining target object identifiers from the plurality of object identifiers based on a preset condition; displaying the target object identifiers in the form of a second matrix in the first sub-area; and displaying the plurality of object identifiers in the form of the first matrix in the second sub-area or displaying pieces of association information of the plurality of objects in the form of a third matrix in the second sub-area.

According to one or more embodiments of the present disclosure, the present disclosure provides an information display method, wherein the displaying pieces of association information of the plurality of objects in the form of a third matrix in the second sub-area comprises: acquiring object status information corresponding to the plurality of object identifiers; and displaying the object identifiers and object status information in the form of the third matrix in the second sub-area.

According to one or more embodiments of the present disclosure, the present disclosure provides an information display method, wherein the method further comprises: controlling the object identifiers and object status information to be moved and displayed in the content display page in response to the number of the pieces of association information of the objects being greater than a third threshold.

According to one or more embodiments of the present disclosure, the present disclosure provides an information display method, wherein a display manner for the object identifiers in the form of the third matrix is different from that in the form of the first matrix; and/or the display manner for the object identifiers in the form of the third matrix is different from that in the form of the second matrix.

According to one or more embodiments of the present disclosure, the present disclosure provides an information display method, wherein the preset operation on the first area comprises at least one of: a tapping operation on the first area; a triggering operation on an expansion control included in the first area; and a sliding operation in a second direction with a starting point within the first area.

According to one or more embodiments of the present disclosure, the present disclosure provides an information display apparatus comprising: a first area display module for displaying a plurality of object identifiers in a first area of a content display page, the first area being configured for switching of the display of the plurality of object identifiers based on a first interaction operation; and a second area display module for switching to displaying the plurality of object identifiers in a second area in the content display page in response to a preset operation on the first area, wherein the second area is configured for switching of the display of the plurality of object identifiers based on a second interaction operation.

According to one or more embodiments of the present disclosure, the present disclosure provides an information display apparatus, wherein the second area display module comprises: a first threshold determination unit for determining whether the number of the plurality of object identifiers is greater than a first threshold; and a first object identifier display unit for switching to displaying the plurality of object identifiers in the second area in the content display page in response to the number of the plurality of object identifiers being greater than the first threshold.

According to one or more embodiments of the present disclosure, the present disclosure provides an information display apparatus, wherein the plurality of object identifiers are displayed in the form of a single row in the first area, and/or the object identifiers are displayed in the form of a first matrix in the second area.

According to one or more embodiments of the present disclosure, the present disclosure provides an information display apparatus, wherein the first interaction operation is a sliding operation in a first direction, and the second interaction operation is a sliding operation in a second direction, the first direction being different from the second direction.

According to one or more embodiments of the present disclosure, the present disclosure provides an information display apparatus, wherein the second area display module further comprises: an object identifier moving display unit for controlling the plurality of object identifiers to be moved and displayed in the second area in response to the number of the plurality of object identifiers being greater than a second threshold.

According to one or more embodiments of the present disclosure, the present disclosure provides an information display apparatus, wherein the second area comprises a first sub-area and a second sub-area, the apparatus further comprising: a target object identifier determination unit for determining target object identifiers from the plurality of object identifiers based on a preset condition; and the second area display module, comprising: a second object identifier display unit for displaying the target object identifiers in the form of a second matrix in the first sub-area; and the first object identifier display unit for further displaying the plurality of object identifiers in the form of the first matrix in the second sub-area or displaying pieces of association information of the plurality of objects in the form of a third matrix in the second sub-area.

According to one or more embodiments of the present disclosure, the present disclosure provides an information display apparatus, wherein the first object identifier display unit, when used for displaying the pieces of association information of the plurality of objects in the form of the third matrix in the second sub-area, comprises: a status information acquisition sub-unit for acquiring object status information corresponding to the plurality of object identifiers; and a status information display sub-unit for displaying the object identifiers and object status information in the form of the third matrix in the second sub-area.

According to one or more embodiments of the present disclosure, the present disclosure provides an information display apparatus, wherein the second area display module comprises: a status information moving display unit for controlling the object identifiers and object status information to be moved and displayed in the content display page in response to the number of the pieces of association information of the objects being greater than a third threshold.

According to one or more embodiments of the present disclosure, the present disclosure provides an information display apparatus, wherein a display manner for the object identifiers in the form of the third matrix is different from that in the form of the first matrix; and/or the display manner for the object identifiers in the form of the third matrix is different from that in the form of the second matrix.

According to one or more embodiments of the present disclosure, the present disclosure provides an information display apparatus, wherein the preset operation on the first area comprises at least one of: a tapping operation on the first area; a triggering operation on an expansion control included in the first area; and a sliding operation in a second direction with a starting point within the first area.

According to one or more embodiments of the present disclosure, the present disclosure provides an electronic device, comprising:
one or more processors;
a memory for storing one or more programs that,
when executed by the one or more processors, cause the one or more processors to implement the information display method according to any one of embodiments provided in the present disclosure.

According to one or more embodiments of the present disclosure, the present disclosure provides a computer readable storage medium having stored thereon a computer program which, when executed by a processor, implements the information display method according to any one of embodiments provided in the present disclosure.

An embodiment of the present disclosure further provides a computer program product, the computer program product comprising a computer program or instructions that, when executed by a processor, implements the information display method as described above.

The above description is merely illustration of the preferred embodiments of the present disclosure and the technical principles utilized. It should be understood by those skilled in the art that the scope of the disclosure involved in the present disclosure is not limited to the technical solutions formed by particular combinations of the above technical features, but also covers other technical solutions formed by any combinations of the above technical features or their equivalent features without departing from the above disclosed concept, e.g., technical solutions formed by interchanging the above features with (but not limited to) the technical features with similar functions disclosed in the present disclosure.

Furthermore, although respective operations are depicted using a particular order, this should not be taken to require that the operations be performed in the particular order shown or in a sequential order of execution. Multitasking and parallel processing may be advantageous in certain environments. Similarly, although several specific implementation details are included in the above discussion, these should not be construed as limiting the scope of the present disclosure. Certain features described in the context of individual embodiments may also be implemented in combination in a single embodiment. Conversely, various features described in the context of a single embodiment may also be implemented in a plurality of embodiments, either individually or in any suitable sub-combination.

Although the present subject matter has been described using language specific to structural features and/or method logic actions, it should be understood that the subject matter defined in the attached claims is not necessarily limited to the specific features or actions described above. On the contrary, the specific features and actions described above are merely exemplary forms for implementing the claims.

## Claims

1. An information display method, comprising:
displaying a plurality of object identifiers in a first area of a content display page, wherein the first area is configured for switching of the display of the plurality of object identifiers based on a first interaction operation; and
in response to a preset operation on the first area, switching to displaying the plurality of object identifiers in a second area in the content display page, wherein the second area is configured for switching of the display of the plurality of object identifiers based on a second interaction operation.

2. The method according to claim 1, wherein the switching to displaying the plurality of object identifiers in a second area in the content display page in response to a preset operation on the first area comprises:
determining whether the number of the plurality of object identifiers is greater than a first threshold; and
in response to the number of the plurality of object identifiers being greater than the first threshold, switching to displaying the plurality of object identifiers in the second area in the content display page.

3. The method according to claim 1, wherein the plurality of object identifiers are displayed in the form of a single row in the first area, and/or the object identifiers are displayed in the form of a first matrix in the second area.

4. The method according to claim 1, wherein the first interaction operation is a sliding operation in a first direction, and the second interaction operation is a sliding operation in a second direction, the first direction being different from the second direction.

5. The method according to claim 4, further comprising:
in response to the number of the plurality of object identifiers being greater than a second threshold, controlling the plurality of object identifiers to be moved and displayed in the second area.

6. The method according to claim 1, wherein the second area comprises a first sub-area and a second sub-area, the method further comprising:
determining target object identifiers from the plurality of object identifiers based on a preset condition;
displaying the target object identifiers in the form of a second matrix in the first sub-area; and
displaying the plurality of object identifiers in the form of a first matrix in the second sub-area or displaying pieces of association information of the plurality of objects in the form of a third matrix in the second sub-area.

7. The method according to claim 6, wherein the displaying pieces of association information of the plurality of objects in the form of a third matrix in the second sub-area comprises:
acquiring object status information corresponding to the plurality of object identifiers; and
displaying the object identifiers and object status information in the form of the third matrix in the second sub-area.

8. The method according to claim 7, further comprising:
in response to the number of the pieces of association information of the objects being greater than a third threshold, controlling the object identifiers and object status information to be moved and displayed in the content display page.

9. The method according to claim 5 or 7, wherein a display manner for the object identifiers in the form of the third matrix is different from that in the form of the first matrix; and/or the display manner for the object identifiers in the form of the third matrix is different from that in the form of the second matrix.

10. The method according to claim 1, wherein the preset operation on the first area comprises at least one of:
a tapping operation on the first area;
a trigger operation on an expansion control included in the first area; and
a sliding operation in a second direction with a starting point within the first area.

11. An information display apparatus, comprising:
a first area display module for displaying a plurality of object identifiers in a first area of a content display page, the first area being configured for switching of the display of the plurality of object identifiers based on a first interaction operation; and
a second area display module for switching to displaying the plurality of object identifiers in a second area in the content display page in response to a preset operation on the first area, wherein the second area is configured for switching of the display of the plurality of object identifiers based on a second interaction operation.

12. An electronic device comprising:
one or more processors;
a storage means for storing one or more programs that,
when executed by the one or more processors, cause the one or more processors to implement the method according to any one of claims 1-10.

13. A computer readable storage medium having stored thereon a computer program that, when executed by a processor, implements the method according to any one of claims 1-10.

14. A computer program product, the computer program product comprising a computer program or instructions that, when executed by a processor, implements the method according to any one of claims 1-10.

15. A computer program, the computer program comprising instructions that, when executed by a processor, implements the method according to any one of claims 1-10.
